# EUROPEAN PATENT APPLICATION

(11) **EP 2 460 694 A1**
(43) Date of publication of application: **06.06.2012**
(21) Application number: 10804260.7
(22) Date of filing: 14.07.2010
(51) Int. Cl.: B60R 16/02, B60R 11/02, G06F 3/023, G06F 3/041, G06F 3/048, H03M 11/04

(54) **OPERATION SYSTEM FOR VEHICLE**

(30) Priority: 31.07.2009 JP 2009179289
(71) Applicant: Honda Motor Co., Ltd., Minato-ku Tokyo 107-8556 (JP)
(72) Inventor: HASHIMOTO Kaneaki, Wako-shi Saitama 351-0193 (JP); YOKOYAMA Sadahiro, Wako-shi Saitama 351-0193 (JP)
(74) Representative: Feller, Frank
(86) International application number: PCT/JP2010/061920
(87) International publication number: WO 2011/013514

(57) **Abstract**

An operation system for a vehicle includes, a display unit; a proximity detecting unit that detects that a part of a human body approaches the display unit; a position specifying unit that specifies positions on the display unit where the part of the human body approached on the basis of a detection result of the proximity detecting unit; and a display controlling unit that makes an icon display screen, which displays icons corresponding to respective operation items of a plurality of in-vehicle devices, and a selection screen, which selects set values or operation modes of the operation items corresponding to the icons which are displayed at the positions when the positions are specified by the position specifying unit, are displayed on the display unit; wherein the icons are formed of at least characters or figures representing the set values or the operation modes that are currently selected, and wherein the display controlling unit makes the icon display screen, on which all operable icons are displayed, be displayed on one screen of the display unit.

## Description

### Technical Field of the Invention

The present invention relates to an operation system for a vehicle.
Priority is claimed on Japanese Patent Application No. 2009-179289, filed July 31, 2009, the content of which is incorporated herein by reference.

### Background Art

An operation system for a vehicle, which operates in-vehicle devices, has been known hitherto. For example, in an operation system for a vehicle disclosed in Patent Document 1, system changeover switches are always displayed on a main monitor which is a touch panel. Accordingly, it is possible to operate in-vehicle devices, which correspond to the system changeover switches, anytime.

### Prior Art Document

### Patent Document

Patent Document 1: Japanese Unexamined Patent Application, First Publication No. 2006-96251

### Summary of the Invention

### Problems to be Solved by the Invention

However, in the above-mentioned operation system for a vehicle, it is possible to select devices, which are objects to be operated, by system changeover switches. However, in some cases, it is necessary to perform a touch operation three times or more until the completion of an intended operation. Thus, there is a problem in that the burden on a user is increased due to the deterioration of operability caused by the fact that these operating layers are deep.

The invention has been made in consideration of the above-mentioned circumstances, and an object of the invention is to provide an operation system for a vehicle that is capable of reducing the burden on a user by preventing the deterioration of operability caused by operating layers.

### Means for Solving the Problems

The invention employs the following tool in order to achieve the object by solving the above-mentioned problem.
(1) An operation system for a vehicle according to the invention includes a display unit, a proximity detecting unit that detects that a part of a human body approaches the display unit, a position specifying unit that specifies positions on the display unit where the part of the human body approached on the basis of a detection result of the proximity detecting unit, and a display controlling unit that makes an icon display screen, which displays icons corresponding to respective operation items of a plurality of in-vehicle devices, and a selection screen, which selects set values or operation modes of the operation items corresponding to the icons which are displayed at the positions when the positions are specified by the position specifying unit, are displayed on the display unit, wherein the icons are formed of at least characters or figures representing the set values or the operation modes that are currently selected, and wherein the display controlling unit makes the icon display screen, on which all operable icons are displayed, be displayed on one screen of the display unit..

According to the operation system for a vehicle described in above-mentioned (1), all icons formed of characters or figures, which represent the current set value or the current operation mode of the operation items of the in-vehicle devices, are displayed on one screen of the display unit as the icon display screen, and a user selects the icon displayed on the icon display screen by a finger or the like. Accordingly, a selection screen of an operation mode or a set value of an operation item corresponding to the icon is displayed. An operation mode or a set value can be changed by the operation selecting the operation mode or the set value on the selection screen.
Furthermore, since the icons are formed of characters or figures that represent the current set values or the current operation modes of the operation items corresponding to the icons, the current set values or the current operation modes of the operation items of all of a plurality of in-vehicle devices can be confirmed on the icon display screen displayed on one screen of the display unit. For this reason, it is easy to visually check the current set values or the current operation modes as compared to a case where the current set values or operation modes are individually displayed for each in-vehicle device as in the related art and there is an effect of improving marketability and reducing display space.
Furthermore, when the icon formed of a character or a figure representing the current set value or operation mode is operated, the selection screen is displayed. Accordingly, since an operation for changing a set value or an operation mode is performed immediately after the confirmation of the current set value or operation mode, an operation for changing an operation mode or a set value of each operation item is intuitively performed. As a result, there is an effect of reducing operating time.

(2) In the operation system for a vehicle described in above-mentioned (1), the display controlling unit may make the selection screen, on which all the operable set values or the operable operation modes are displayed, be displayed on one screen of the display unit.

In the case of the operation system for a vehicle described in above-mentioned (2), when one icon is selected on the icon display screen, a selection screen where all operable set values or operation modes are displayed is displayed on one screen of the display unit as an operation item corresponding to the icon. For this reason, set values or operation modes of the operation items corresponding to all the icons displayed on the icon display screen can be changed by two times of similar selection. As a result, operability is improved, so that it is possible to reduce the burden on a user.

(3) In the operation system for a vehicle described in above-mentioned (2), the display controlling unit may reduce the contrast of the icon display screen and may make the selection screen be displayed and superimposed on the icon display screen of which contrast has been reduced, when the selection screen is displayed.

In the case of the operation system for a vehicle described in above-mentioned (3), by reducing the contrast (for example, switching the display to such as gray-out) of a selection display when the selection screen is displayed and superimposed on the icon display screen, it is possible to easily understand the current operating layer, and therefore it is possible to more intuitively operate an icon. As a result, there is an effect of improving marketability

(4) In the operation system for a vehicle described in above-mentioned (1), the display controlling unit may switch the set values or the operation modes, which are represented by characters or figures, as a specific icon among the plurality of icons displayed on the icon display screen, according to the current set values or the current operation modes that are displayed in another icon associated with the specific icon.

In the case of the operation system for a vehicle described in above-mentioned (4), when an operation mode and a set value of the operation item corresponding to another icon are switched, the current set value or operation mode, which is displayed as a specific icon by a character or a figure, is automatically switched according to the operation mode and the set value. For this reason, as compared to a case where an icon is provided for each operation mode or set value of the operation item corresponding to another icon, it is possible to prevent the display from becoming complicated by removing unnecessary icons. As a result, there is an effect of further improving operability.

(5) In the operation system for a vehicle described in above-mentioned (1), the selection screen may be displayed when the proximity detecting unit detects that a distance between the display unit and the part of the human body becomes equal to or smaller than a predetermined distance.

In the case of the operation system for a vehicle described in above-mentioned (5), a selection screen is displayed at the time when a distance between the display unit and the part of the human body becomes equal to or smaller than a predetermined distance is detected by the proximity detecting unit. As a result, there is an effect of quickly displaying the selection screen.

### Effect of the Invention

According to the invention, it is possible to provide an operation system for a vehicle that is capable of reducing the burden on a user by preventing the deterioration of operability that is caused by operating layers.

### Brief Description of Drawings

FIG. 1 is a schematic configuration view of an operation system for a vehicle according to an embodiment of the invention.
FIG. 2 is a view showing an icon display screen according to the embodiment.
FIG. 3 is a view showing an operation of selecting a source icon on the icon display screen.
FIG. 4 is a view showing a screen on which a selection screen corresponding to the source icon is being displayed.
FIG. 5 is a view showing a screen on which the selection screen has been fully completely displayed.
FIG. 6 is a view showing an operation for selecting a blowing mode icon according to the embodiment.
FIG. 7 is a view showing a screen on which a selection screen corresponding to the blowing mode icon being displayed is still on progress.
FIG. 8 is a view showing a screen on which the selection screen has been fully displayed.
FIG. 9 is a view showing a selection screen that is displayed when an operation of selecting a volume icon according to the embodiment is performed.
FIG. 10 is a view showing a selection screen that is displayed when an operation of selecting a seek icon according to the embodiment is performed.
FIG. 11A is a view showing a selection screen that is displayed when an operation of selecting a band icon according to the embodiment is performed, and is a view showing the selection screen when AM is selected.
FIG. 11B is a view showing the selection screen, and is a view showing the selection screen when FM is selected.
FIG. 11C is a view showing the selection screen, and is a view showing the selection screen when SATELLITE RADIO is selected.
FIG. 11D is a view showing the selection screen, and is a view showing the selection screen when CD is selected.
FIG. 11E is a view showing the selection screen, and is a view showing the selection screen when HDD is selected.
FIG. 11F is a view showing the selection screen, and is a view showing the selection screen when external input is selected.
FIG. 12A is a view showing a selection screen that is displayed when an operation for selecting a preset icon according to the embodiment is performed.
FIG. 12B is a view showing the selection screen.
FIG. 13 is a view showing a selection screen that is displayed when an operation of selecting a play mode icon according to the embodiment is performed.
FIG. 14A is a view showing a selection screen that is displayed when a set temperature icon of a driver's seat according to the embodiment is selected, and is a view showing the selection screen at the time of a dual mode.
FIG. 14B is a view showing the selection screen, and is a view showing the selection screen at the time of a single mode.
FIG. 15A is a view showing a selection screen that is displayed when an operation for selecting a set temperature icon for a passenger seat according to the embodiment is performed, and is a view showing the selection screen displayed at the time of a dual mode.
FIG. 15B is a view showing the selection screen, and is a view showing the set temperature icon for a passenger seat at the time of a single mode.
FIG. 16 is a view showing a selection screen that is displayed when an auto-icon according to the embodiment is selected.
FIG. 17 is a view showing a selection screen that is displayed when a fan speed icon according to the embodiment is selected.
FIG. 18 is a view showing a figure that represents an outside air mode and is displayed when an operation of selecting an inside/outside air icon at the time of an inside air mode according to the embodiment is performed.

### Description of Embodiments

An operation system for a vehicle according to an embodiment of the invention will be described below with reference to the drawings.

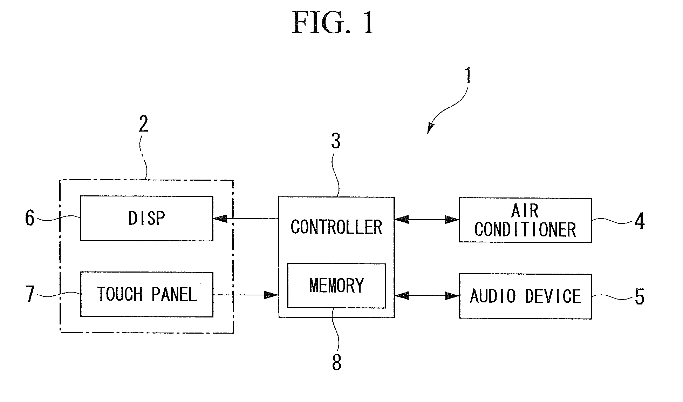

FIG. 1 shows the schematic configuration of an operation system for vehicle 1 according to the embodiment. The operation system for vehicle 1 includes an operation unit 2 and a controller (display controlling unit) 3. An air conditioner 4 and an audio device 5, which are a plurality of in-vehicle devices, are connected to the operation system for vehicle 1. Each of operation items of the air conditioner 4 and the audio device 5 can be operated.

The operation unit 2 is disposed in the vicinity of the steering wheel within easy reach of the driver such as below a display (not shown) for a car navigation system disposed on the dashboard of a vehicle. The operation unit 2 includes a display (DISP, display unit) 6 such as a liquid crystal display, and a touch panel (proximity detecting unit, position specifying unit) 7 disposed over the entire area of the display surface of the display 6.

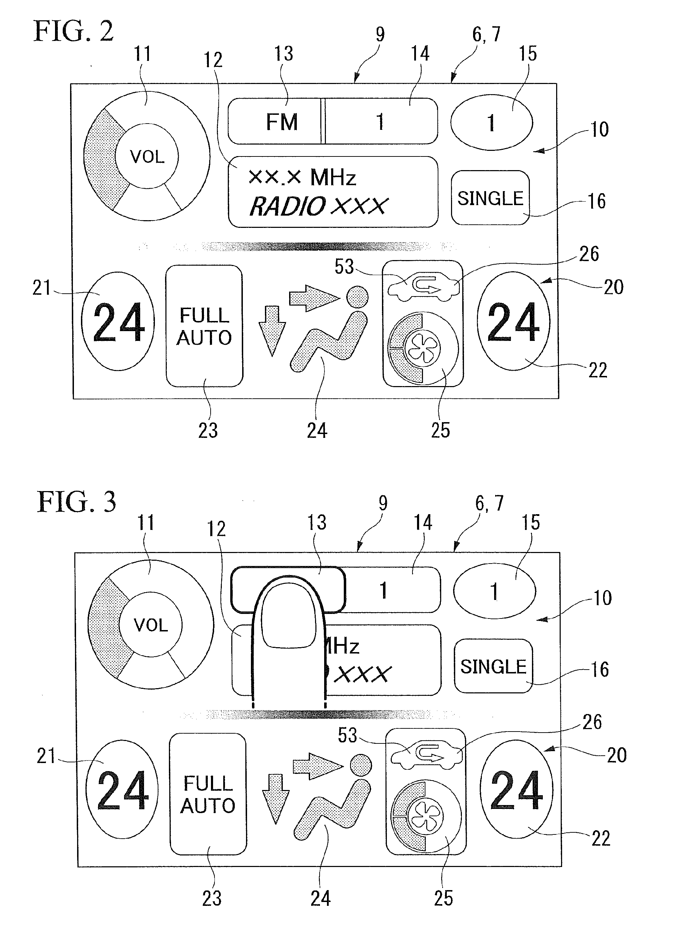

The display 6 displays an icon display screen 9 (see FIG. 2) according to a control command of the controller 3. A plurality of icons (to be described below), which correspond to the respective operation items of the air conditioner 4 and the audio device 5, for example, the air volume or set temperature of the air conditioner 4, the volume or source of the audio device 5, and the like, respectively, are disposed on the icon display screen 9 so as to be displayed on one screen of the display 6. Only operable icons among the plurality of icons are displayed on this display 6.

The touch panel 7 is an electrostatic capacitive touch panel or the like capable of detecting that a distance between the touch panel 7 and a part of the human body becomes equal to or smaller than a predetermined distance or a proximity position where a part of the human body approaches. The detection result of the touch panel 7 is output to the controller 3.

The controller 3 includes an arithmetic unit such as a CPU, and makes the icon display screen 9 be displayed on the above-mentioned display 6 by executing a program stored in a memory 8. Furthermore, the controller 3 detects an operation of a user who selects the icon display screen 9. Specifically, the controller 3 detects on which icon a user performs an operation for selecting, on the basis of the detection result of the touch panel 7 and the display position of an icon on the icon display screen 9.

Furthermore, the controller 3 makes a selection screen (to be described below), on which a set value of an operation item corresponding to an icon subjected to a selection operation or an operation mode of an operation item corresponding to an icon subjected to a selection operation is selected, be displayed and superimposed on the icon display screen 9.
Furthermore, the controller 3 detects an operation for changing a set value or an operation mode, which is displayed on the selection screen, on the basis of the detection result of the touch panel 7.

FIG. 2 shows an example of the icon display screen 9 displayed on the display 6. An audio device-icon display unit 10, which includes a plurality of icons for the operation of the audio device, is disposed on the icon display screen 9 above the middle position of the icon display screen 9 in a vertical direction, and an air conditioner-icon display unit 20, which includes a plurality of icons for the operation of an air conditioner, is disposed below the middle position of the icon display screen 9 in the vertical direction. Meanwhile, an air conditioner 4, which has a function capable of individually setting the temperatures of a driver's seat and a passenger seat (a so-called dual mode), will be described as an example in this embodiment.

A volume icon 11, a seek icon 12, a source icon 13, a band icon 14, a preset icon 15, and a play mode icon 16 are displayed on the audio device icon display unit 10 as a plurality of icons. These respective icons are formed of at least characters or figures that respectively represent current set values or current operation modes. The volume icon 11 is formed of a figure (for example, a circle graph or the like) that represents the level of current volume. The source icon 13 is formed of a character that represents the current source. The band icon 14 is formed of a character that represents the currently selected item (a set value or an operation mode). The seek icon 12 is formed of characters that represent the currently selected frequency and the currently selected station. The preset icon 15 is formed of a character that represents the current preset number. The play mode icon 16 is formed of a character that represents the name of the current mode.

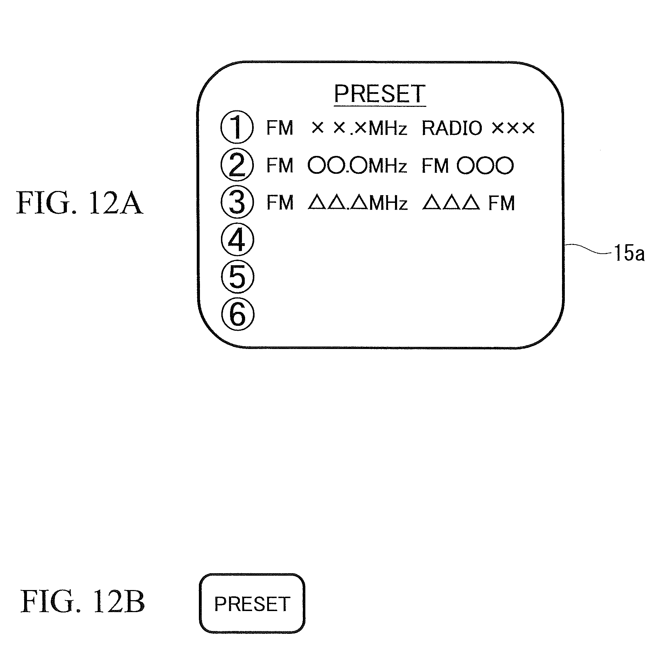

Here, the band icon 14 is associated with the source icon 13. For example, when the current source of the source icon 13 is changed, the display of the character of the selected item of the band icon 14 is also changed according to this source. Meanwhile, when presetting is not yet made, the character of "preset" is displayed in the preset icon 15 (for example, see FIG. 12B).

Two set temperature icons 21 and 22, an auto-icon 23, a blowing mode icon 24, a fan speed icon 25, and an inside/outside air icon 26 are displayed on the air conditioner-icon display unit 20. These respective icons of the air conditioner-icon display unit 20 are also formed of characters or figures that represent currently selected set values or operation modes. The set temperature icons 21 and 22 are formed of characters that represent the current set temperatures. The auto-icon 23 is formed of a character that represents the current state of the air conditioner. The blowing mode icon 24 is formed of a figure that represents the current blowing port mode. The fan speed icon 25 is formed of a figure (for example, a circle graph or the like) that represents the current fan speed. The inside/outside air icon 26 is formed of a figure that represents the current intake mode.

The operation system for vehicle 1 according to this embodiment has the above-mentioned configuration. The operation of the operation system for vehicle 1 and the respective selection screens, which are displayed when the operations of selecting the respective icons are performed, will be described below with reference to the drawings. Meanwhile, a case where the operation of selecting the source icon 13 of the above-mentioned audio device-icon display unit 10 is performed and a case where the operation of selecting the blowing mode icon 24 of the air conditioner-icon display unit 20 is performed will be described in the description of the operation of the operation system for vehicle 1; and only the displayed selection screens will be described for the operations of other icons.

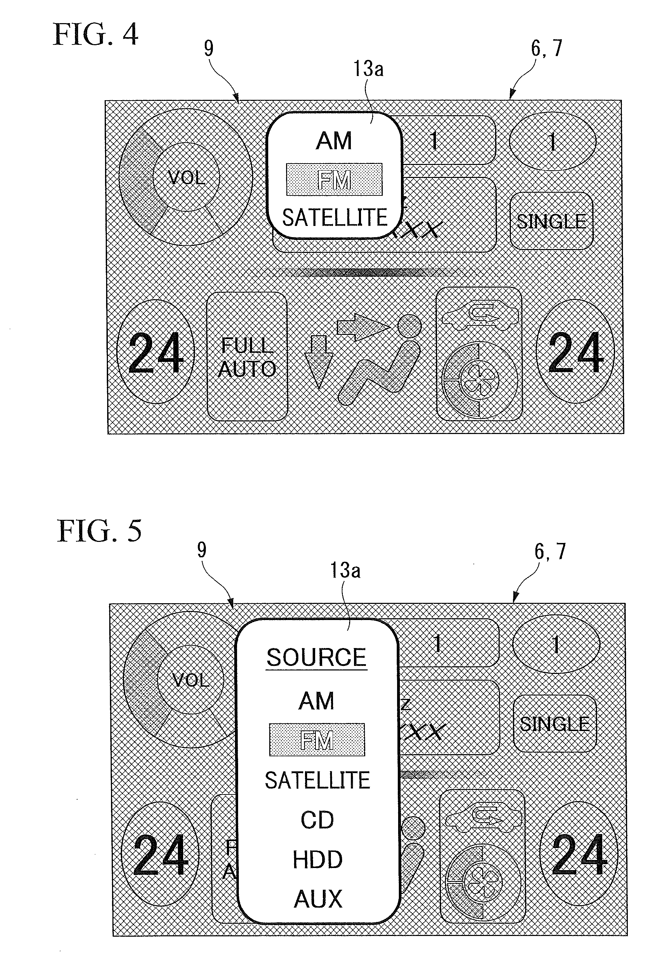

First, when an operating finger approaches the source icon 13 displayed on the display 6 as shown in FIG. 3 and a distance between the operating finger and the touch panel 7 becomes equal to or smaller than a predetermined distance, the controller 3 detects the position of the operating finger and determines that the source icon 13 corresponding to the position of the operating finger is selected (hereinafter, simply referred to as a selection operation). Then, the controller 3 makes a selection screen 13a for the source icon 13 be displayed and superimposed on the icon display screen 9 of the display 6. As shown in FIGS. 4 and 5, characters representing respective source names, such as "AM"," FM", "SATELLITE", "CD", "HDD", and "AUX", which represent operation modes, are displayed in this order from above on the selection screen 13a; and only the currently selected source name is highlighted by white-and-black inversion or the like. If set values or the names of operation modes can be displayed in one vertical line as described above, a screen is gradually expanded downward from the display position (see FIG. 4) of the source icon 13 when display begins and the screen is fully displayed after about 0.3 to 0.4 seconds from the beginning of the display, for example, as the selection screen 12a shown in FIGS. 4 and 5.

Here, when the character of the above-mentioned "AM" is selected and operated, the source of the audio device 5 is changed to AM. Likewise, when the character of "FM" is selected and operated, the source of the audio device 5 is changed to FM. Furthermore, when the character of "SATELLITE" is selected and operated, the source of the audio device 5 is changed to SATELLITE RADIO. When the character of "CD" is selected and operated, the source of the audio device 5 is changed to CD. When the character of "HDD" is selected, the source of the audio device 5 is changed to HDD. When the character of "AUX" is selected and operated, the source of the audio device 5 is changed to AUX.

Furthermore, for example, when the character of "CD" is selected and operated, a control command for switching a source to "CD" from "FM", which is the current source, is output to the audio device 5 from the controller 3. After that, the selection screen 12a disappears after a predetermined time and the icon display screen 9 is displayed alone. Meanwhile, when the selection screen 12a is displayed and superimposed on the icon display screen 9, it is preferable that the contrast of the icon display screen 9 be reduced as shown in FIGS. 4 and 5 (for example, gray-out or the like).

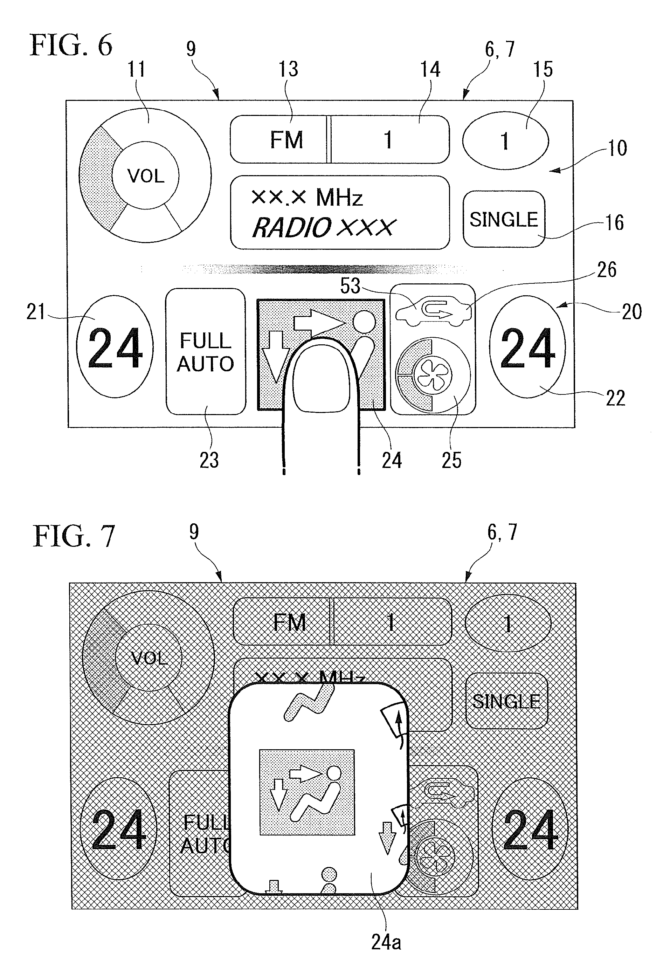

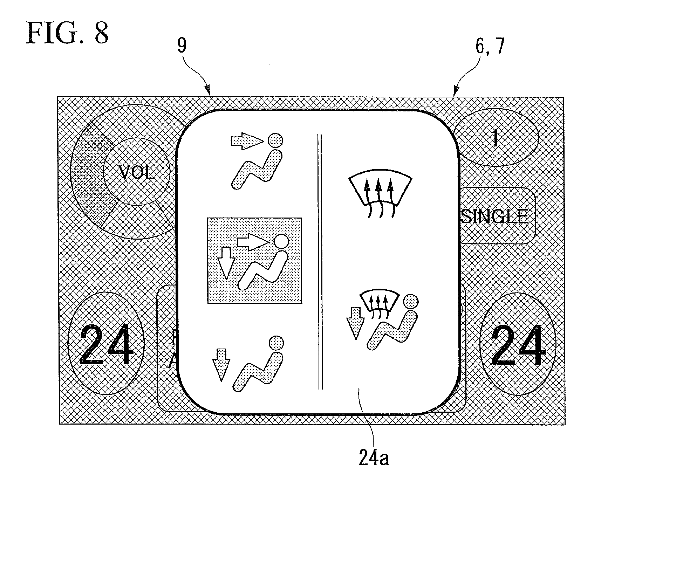

On the other hand, when it is determined that the blowing mode icon 24 of the air conditioner-icon display unit 20 is selected and operated by an operating finger, a selection screen 24a for the blowing mode icon 24 is displayed and superimposed on the icon display screen 9 as shown in FIGS. 6 to 8. As shown in FIGS. 7 and 8, blowing modes of the air conditioner 4 are displayed in two lines on the selection screen 24a. The blowing modes are a plurality of figures (which corresponding to, for example, a DEF mode, an F/D defroster mode, a VENT mode, a B/L mode, and a FOOT mode) representing which blowing port among a plurality of blowing ports (not shown) air-conditioning air is blown out of. In a case when the modes are not displayed in one line, a screen is gradually expanded from the currently selected blowing mode as a center (see FIG. 7) in all directions when the display begins and the screen is fully displayed after about 0.3 to 0.4 seconds like the above-mentioned selection screen 12a.

Next, the selection screens of the respective icons will be described. These respective selection screens are displayed and superimposed on the icon display screen 9 when the respective corresponding icons are selected, like the above-mentioned selection screens 12a and 24a.

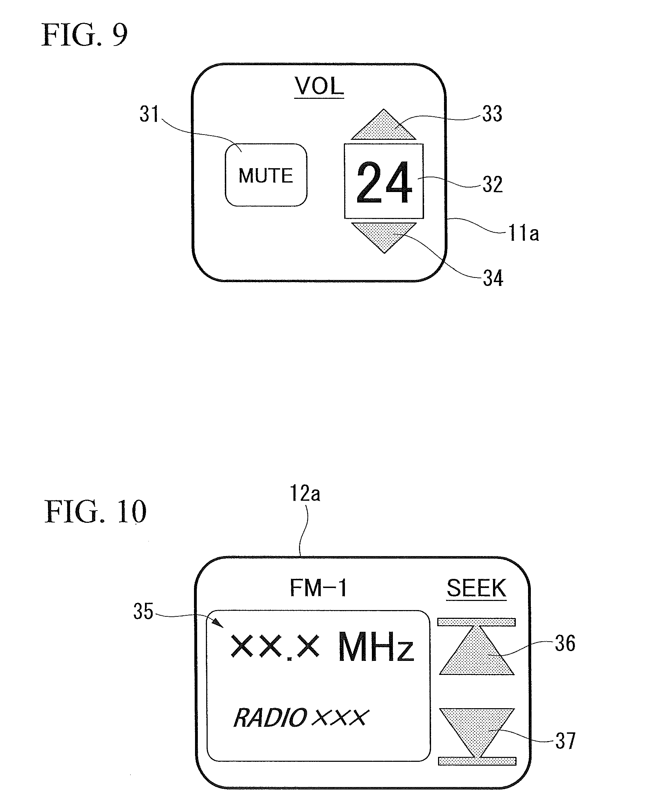

FIG. 9 shows a selection screen 11a that is displayed when it is determined that the volume icon 11 is selected and operated. A character 31 of "MUTE" representing a mute mode, a character 32 of the current volume "24", and figures of arrows 33 and 34, which are disposed above and below the character 32 and used to increase and decrease volume, are displayed on the selection screen 11a. The mode of the audio device 5 is changed to a mute mode by an operation for selecting the character 31 of "MUTE", and volume is increased and decreased by the selection of the arrows 33 and 34.

FIG. 10 shows a selection screen 12a that is displayed when it is determined that the seek icon 12 is selected and operated. A display unit 35 that displays the currently selected received frequency and the name of a radio station and the like corresponding to this received frequency, and figures of an up arrow 36 and a down arrow 37 that are used to detect a receivable frequency from any one side of the high-frequency side or the low-frequency side of the currently received frequency, are displayed on the selection screen 12a. A receivable adjacent received frequency is detected by the selection and operation of the up arrow 36 or the down arrow 37 and is set as a received frequency, and the content of this setting is displayed on the display unit 35.

Meanwhile, a set value or an operation mode, which is displayed as the band icon 14 by a character or a figure, is switched according to the current set value or operation mode displayed as the source icon 13 by a character or a figure. For example, when an operation mode "AM" is displayed as the source icon 13, an operation mode or a set value of an operation item corresponding to "AM" (for example, any one displayed on a selection screen 14a to be described below) is displayed as the band icon 14. After that, when display performed by the source icon 13 is changed to "FM" from "AM", the display as the band icon 14 is automatically switched to an operation mode or a set value of an operation item corresponding to "FM" (for example, a set value or an operation mode, which was set the last time, of set values or operation modes displayed on a selection screen 14b to be described below). At this time, the operation mode of the audio device 5 is switched so as to be the same operation mode as the operation mode displayed as the band icon 14 by the controller 3. Furthermore, even when the content, which is displayed as the source icon 13, is changed to "SATELLITE", "CD", "HDD", and "AUX", an operation mode or a set value of an operation item displayed as the band icon 14 is automatically switched like the above-mentioned change to "FM" from "AM".

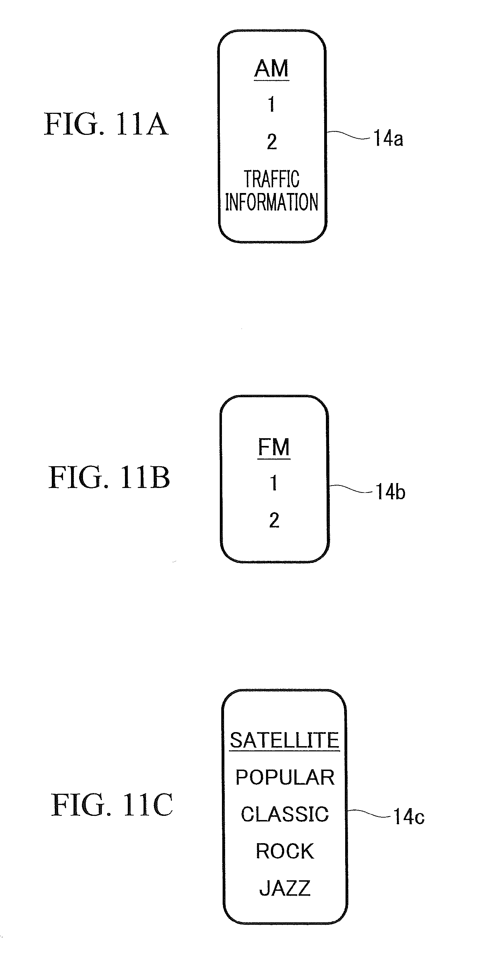

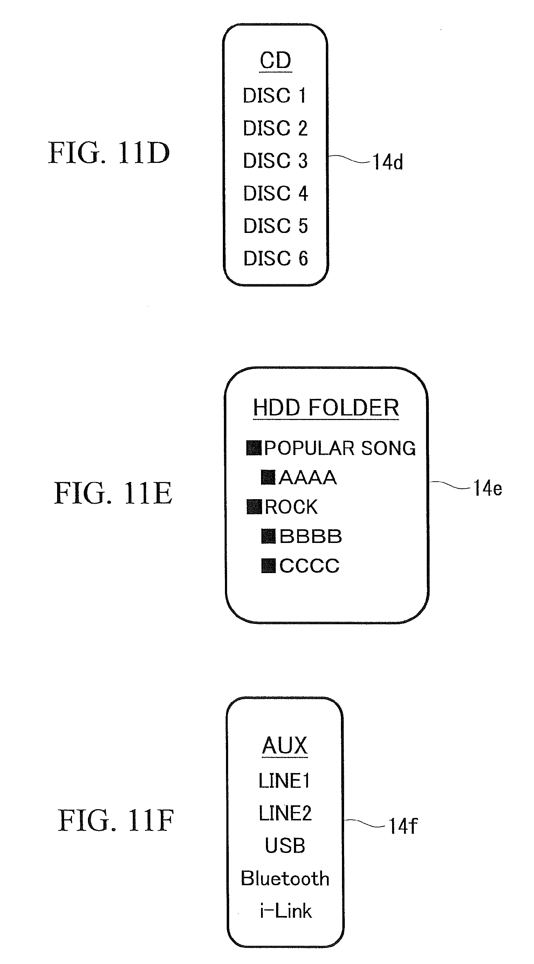

FIGS. 11A to 11F show selection screens 14a to 14f that are displayed when it is determined that the band icon 14 is selected and operated, respectively, and operation modes are displayed by characters in one vertical line on each of the selection screens. Moreover, the selection screens 14a to 14f are switched according to sources that are selected in the source icon 13.

More specifically, if the band icon 14 is selected and operated when "AM" (radio) is selected in the source icon 13, the selection screen 14a is displayed. If the band icon 14 is selected and operated when "FM" (radio) is selected in the source icon 13, the selection screen 14b is displayed. If the band icon 14 is selected and operated when "SATELLITE" (satellite radio) is selected in the source icon 13, the selection screen 14c is displayed. In addition, if the band icon 14 is selected and operated when "CD" (compact disc; hereinafter referred to as CD) is selected in the source icon 13, the selection screen 14d is displayed. If the band icon 14 is selected and operated when "HDD" (hard disk drive; hereinafter referred to as HDD) is selected in the source icon 13, the selection screen 14e is displayed. If the band icon 14 is selected and operated when "AUX" (external input) is selected in the source icon 13, the selection screen 14f is displayed.

On the selection screen 14a, AM bands "1", "2", and "TRAFFIC INFORMATION" are displayed as operation modes by characters. On the selection screen 14b, FM bands "1" and "2" are displayed as operation modes by characters.
On the selection screen 14c, genres of the satellite radio, that is, "POPULAR", "CLASSIC", "ROCK", "JAZZ", and the like are displayed as operation modes by characters.
On the selection screen 14d, disc numbers "DISCI" to "DISC6" of CDs loaded in a CD changer (not shown) are displayed as operation modes by characters.
On the selection screen 14e, artist names "AAAA", "BBBB", and the like stored in folders of a HDD are displayed by genre as operation modes by characters.
On the selection screen 14f, external input lines "LINE1", "LINE2", "USB", "Bluetooth" (registered trademark), and "i-Link" are displayed as operation modes by characters.

FIG. 12A shows a selection screen 15a displayed when it is determined that the preset icon 15 is selected and operated. Preset content (received frequency, station name, and the like) and preset numbers, which have been preset, are displayed on the selection screen 15a. When a line of the preset numbers is selected and operated on the selection screen 15a by an operating finger, the receive channel of the audio device 5 is controlled and changed so that the preset content stored so as to correspond to the preset numbers is received. Meanwhile, when nothing is set as preset content, the display shown in FIG. 12B, which stimulates presetting, is displayed.

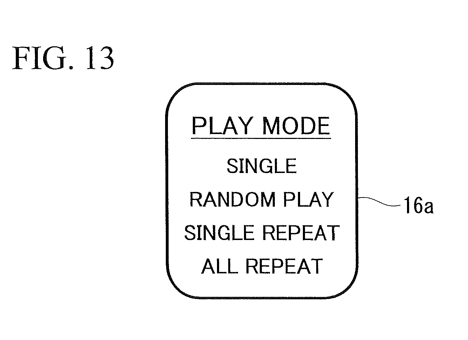

FIG. 13 shows a selection screen 16a that is displayed when it is determined that the play mode icon 16 is selected and operated. Characters of sound reproducing methods "SINGLE", "RANDOM PLAY", "SINGLE REPEAT", and "ALL REPEAT" are displayed on the selection screen 16a as operation modes. The setting of the play mode of the audio device 5 is changed by the selection and operation of these characters.

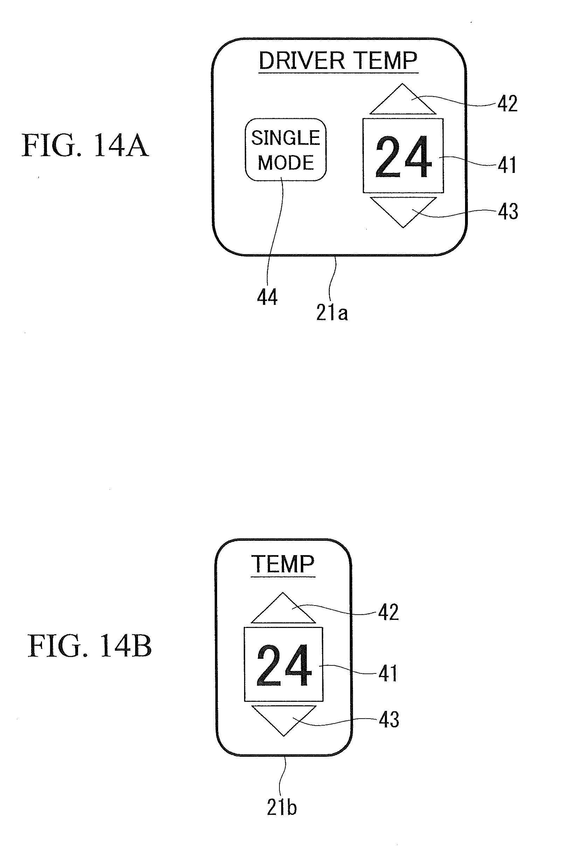

FIGS. 14A and 14B show selection screens 21a and 21b that are displayed when it is determined that the set temperature icon 21 is selected and operated, respectively. The selection screen 21a is displayed at the time of a dual mode, and the selection screen 21b is displayed at the time of a single mode. On the selection screen 21a, a character 41 of "24", which is the current temperature set value (DRIVER TEMP) of the driver's seat, is displayed and arrows 42 and 43 used to increase and decrease a temperature set value are displayed above and below the character 41. When the set value is increased or decreased by the arrow 42 or 43, the temperature set value of the driver's seat is changed to the increased or decreased set value. In addition, a character 44 of "SINGLE MODE", which is used to select a single mode, is displayed on the side of the character 41. The operation mode of the air conditioner 4 is changed to a single mode from a dual mode by the selection and operation of the character 44. The selection screen 21b, which is displayed when a single mode is selected, is a selection screen obtained by omitting the character 44 from the selection screen 21 a.

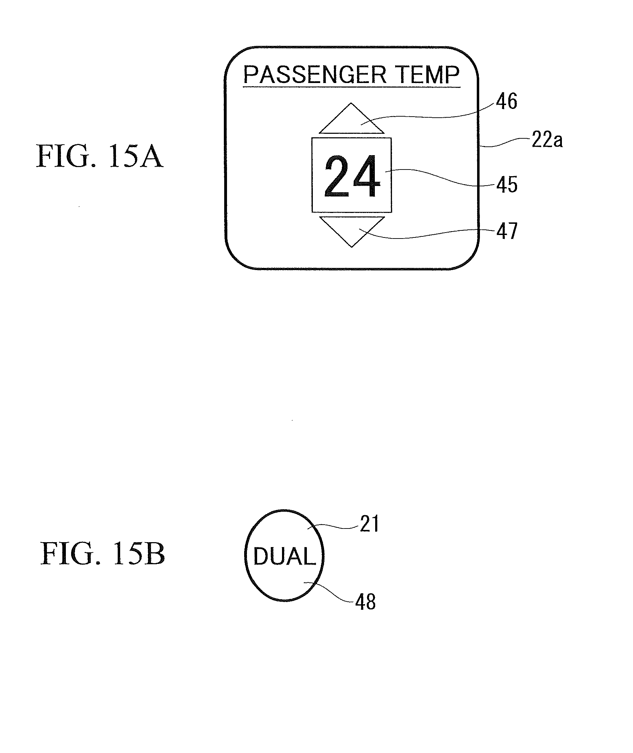

Meanwhile, FIG. 15A shows a selection screen 22a that is displayed when it is determined that the set temperature icon 22 is selected and operated. The selection screen 22a is a screen that is displayed to set the temperature of a passenger seat at the time of a dual mode. On the selection screen 22a, a character 45 of "24", which is the current temperature set value (PASSENGER TEMP) of the passenger seat, is displayed and arrows 46 and 47 used to increase and decrease a temperature set value are displayed above and below the character 45. A character 48 of "DUAL" shown in FIG. 15B is displayed in the set temperature icon 21 at the time of a single mode. The operation mode of the air conditioner is changed to a dual mode by the selection and operation of the character 48 of "DUAL". That is, the set temperature icon 21 has a function of changing the operation mode of the air conditioner 4 to a dual mode at the time of a single mode.

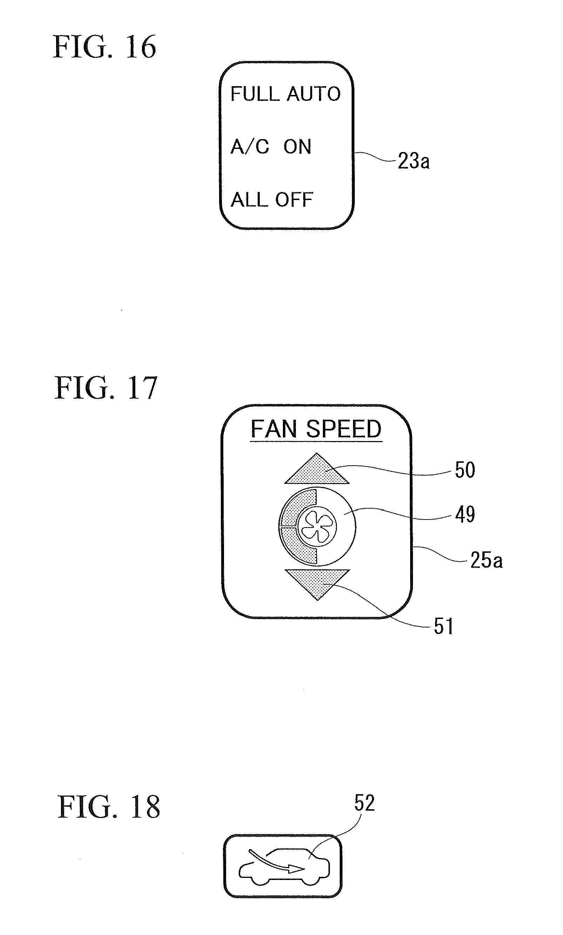

FIG. 16 shows a selection screen 23a that is displayed when it is determined that the auto-icon 23 is selected and operated. "FULL AUTO", "A/C ON", and "ALL OFF", which are the operation modes of the air conditioner 4, are displayed on the selection screen 23a by characters. The operation mode of the air conditioner is changed to the selected operation mode from the current operation mode by the selection and operation of a certain character among these.

FIG. 17 shows a selection screen 25a that is displayed when it is determined that the fan speed icon 25 is selected and operated. On the selection screen 25a, the current air volume (fan speed), which is an operation mode of the air conditioner 4, is displayed by a circle graph 49 and the figures of arrows 50 and 51 used to increase and decrease air volume are displayed above and below the circle graph 49. Air volume is increased and decreased by the operation of these arrows 50 and 51.
FIG. 18 shows a figure 52 of the inside/outside air icon 26 that is displayed when it is determined that the inside/outside air icon 26 is selected and operated in an inside air circulation mode shown in FIG. 2. When the figure 52 is selected and operated, a figure 53 shown in FIG. 2 is displayed. When only two operation modes are switched as described above, a figure representing the current operation mode displayed on an icon is directly changed and do not go through the selection screen. Meanwhile, a case where the inside/outside air mode is displayed by a figure has been described, but the inside/outside air mode may be displayed by a character.

Accordingly, according to the operation system for vehicle 1 of the above-mentioned embodiment, all icons formed of characters or figures, which represent the current set value or the current operation mode of the respective operation items of the air conditioner 4 and the audio device 5, are displayed on one screen of the display 6 as the icon display screen 9. When a user selects an icon displayed on the icon display screen 9 by a finger or the like, a selection screen of an operation mode or a set value of an operation item corresponding to the icon is displayed. Since set values or operation modes can be changed by the selection and operation of set values or operation modes on the selection screen, set values or operation modes can be changed by two times of similar selection and operation of the operation items corresponding to all the icons displayed on the icon display screen 9. As a result, operability is improved, so that it is possible to reduce the burden on a user.

Furthermore, since the icons of the icon display screen 9 are formed of characters or figures that represent the current set values or the current operation modes of the operation items corresponding to the icons, the current set values or the current operation modes of the operation items of all of the air conditioner 4 and the audio device 5 can be confirmed on the icon display screen 9 displayed on one screen of the display 6. For this reason, it is easy to visually check the current set values or the current operation modes as compared to a case where the current set value or the current operation mode is individually displayed for each in-vehicle device as in the related art, and it is possible to improve marketability and to reduce a display space.

Furthermore, when the icon formed of a character or a figure representing the current set value or operation mode is operated, the selection screen is displayed. Accordingly, an operation for changing a set value or an operation mode is performed immediately after the confirmation of the current set value or operation mode. Since an operation for changing an operation mode or a set value of each operation item is intuitively performed in this way, it is possible to reduce the operating time.

Moreover, when a selection screen is displayed and superimposed on the icon display screen 9, it is possible to easily understand the current operating layer by switching the display such as gray-out through the reduction of contrast. Since it is possible to more intuitively operate an icon in this way, it is possible to further improve marketability.

Furthermore, when a set value and an operation mode are switched by the source icon 13, the selected items of the band icon 14 are automatically switched. For this reason, as compared to a case where an icon is provided for each selected item, it is possible to prevent display from becoming complicated by removing unnecessary icons and to further improve operability.

Moreover, a proximity position where a part of the human body approaches is detected at the time when a distance between the display 6 and a part of the human body becomes equal to or smaller than a predetermined distance is detected by the touch panel 7, and a selection screen corresponding to an icon, which is disposed at the proximity position, is displayed. For this reason, a selection screen is quickly displayed.

Meanwhile, the layout of the selection screen of the operation system for vehicle 1 according to the above-mentioned embodiment is an example, and is not limited to the above-mentioned layout.
Furthermore, the air conditioner 4 and the audio device 5 have been connected as in-vehicle devices in the operation system for vehicle 1 according to the above-mentioned embodiment, and the configuration, which operates the respective operation items of the air conditioner 4 and the audio device 5, has been described. The in-vehicle devices are not limited to the air conditioner 4 and the audio device 5. For example, the configuration where an electric seat device changing the position of a seat or a telescopic device and a tilting device changing a steering position are connected so that the respective operation items are operable may be used instead of this configuration. Furthermore, the kinds and disposition of icons, which are displayed on the icon display screen 9, may be switched according to in-vehicle devices that are to be connected to the operation system for vehicle 1.

### Industrial Applicability

According to the invention, it is possible to provide an operation system for a vehicle capable of reducing the burden on a user by preventing the deterioration of operability caused by operating layers.

### Reference Signs List

- 6:: DISPLAY (DISPLAY UNIT)
- 7:: TOUCH PANEL (PROXIMITY DETECTING UNIT, POSITION SPECIFYING UNIT)
- 11:: VOLUME ICON (ICON)
- 12:: SEEK ICON (ICON)
- 13:: SOURCE ICON (ICON)
- 14:: BAND ICON (ICON)
- 15:: PRESET ICON (ICON)
- 16:: PLAY MODE ICON (ICON)
- 21, 22:: SET TEMPERATURE ICON (ICON)
- 23:: AUTO-ICON (ICON)
- 24:: BLOWING MODE ICON (ICON)
- 25:: FAN SPEED ICON (ICON)
- 26:: INSIDE/OUTSIDE AIR ICON (ICON)

## Claims

1. An operation system for a vehicle comprising:
a display unit;
a proximity detecting unit that detects that a part of a human body approaches the display unit;
a position specifying unit that specifies positions on the display unit where the part of the human body approached on the basis of a detection result of the proximity detecting unit; and
a display controlling unit that makes an icon display screen, which displays icons corresponding to respective operation items of a plurality of in-vehicle devices, and a selection screen, which selects set values or operation modes of the operation items corresponding to the icons which are displayed at the positions when the positions are specified by the position specifying unit, are displayed on the display unit,
wherein the icons are formed of at least characters or figures representing the set values or the operation modes that are currently selected, and
wherein the display controlling unit makes the icon display screen, on which all operable icons are displayed, be displayed on one screen of the display unit.

2. The operation system for the vehicle according to Claim 1,
wherein the display controlling unit makes the selection screen, on which all the operable set values or the operable operation modes are displayed, be displayed on one screen of the display unit.

3. The operation system for the vehicle according to Claim 2,
wherein the display controlling unit reduces contrast of the icon display screen and makes the selection screen be displayed and superimposed on the icon display screen of which contrast has been reduced, when the selection screen is displayed.

4. The operation system for the vehicle according to Claim 1,
wherein the display controlling unit switches the set values or the operation modes, which are represented by characters or figures as a specific icon among the plurality of icons displayed on the icon display screen, according to the current set values or the current operation modes that are displayed in another icon associated with the specific icon.

5. The operation system for the vehicle according to Claim 1,
wherein the selection screen is displayed when the proximity detecting unit detects that a distance between the display unit and the part of the human body becomes equal to or smaller than a predetermined distance.
